# EUROPÄISCHE PATENTSCHRIFT

(11) **EP 1 701 130 B1**
(45) Veröffentlichungstag und Bekanntmachung des Hinweises auf die Patenterteilung: **29.12.2010**
(21) Anmeldenummer: 06004753.7
(22) Anmeldetag: 08.03.2006
(51) Int. Cl.: F41H 5/04

(54) **Panzerungsverbundbauteil**
Composite armor part
Elément de blindage composite

(30) Priorität: 08.03.2005 DE 202005003865 U
(43) Veröffentlichungstag der Anmeldung: 13.09.2006
(73) Patentinhaber: GuS Präzision in Kunstoff Glas und Optik GmbH & Co. KG, 32312 Lübbecke (DE)
(72) Erfinder: Schönpflug, Tilo, 32584 Löhne (DE)
(74) Vertreter: Rolf, Gudrun

(56) Entgegenhaltungen:
- EP-A- 0 651 228
- EP-A- 1 427 981
- US-A- 4 836 084
- US-A- 5 705 765

## Beschreibung

Die Erfindung betrifft ein Panzerungsverbundbauteil, insbesondere für ein Fahrzeug, mit mehrschichtigem Aufbau von miteinander verbundenen Schichten unterschiedlichen Materials.

Bekanntes mehrschichtiges Panzerschutzmaterial, DE 195 09 899 C2, welches etwa aus einer keramischen Frontschicht und einer Kunstharz- Pressholz-Schicht mit dazwischen angeordnetem Klebermaterial besteht, weist den Nachteil auf, dass sich die durchschusshemmenden Materialien bei der Herstellung, welche unter Druck und Wärme erfolgt, untereinander verschieben können, was insbesondere bei der Verwendung von einzelnen Keramikkacheln und einer Spaltenbildung dazwischen zu einem nicht normgerechten und möglicherweise lebensgefährdenden Erzeugnis führt.

Ein bekanntes Panzerungselement zum Schutz einer verwundbaren Struktur gemäß der EP-A-0651228 weist in einem allseitig geschlossenen Metallmantel einen Stapel von frei übereinander plazierten Platten auf, die durch allseitige Verkeilungen gegeneinander gedrückt werden. Solche Panzerungselemente werden zu mehreren vor einer zu schützenden Struktur angeordnet.

Eine bekannte Panzerung für ein Dach, welche in der US-A-5705765 veröffentlicht ist, besteht aus mehreren, nebeneinander in einen Abdeckkasten mittels Kleber eingeklebten Panzerungsstapeln aus Keramikfliesen und Glasplatten, deren Abdeckkasten von zwei Grundplatten aus Stahl und Titan abgedeckt ist. Dieses Panzerungssystem wird an einem Fahrzeug oder vor einer anderen verwundbaren Struktur befestigt.

Aufgabe der Erfindung ist es ein Panzerungsverbundbauteil zur Verfügung zu stellen, bei dem sichergestellt ist, dass sich die Lage der unterschiedlichen Bestandteile einer Schicht und auch die Schichten untereinander während des Herstellungsprozesses nicht verschieben können und einen ballistischen Schutz zur Verfügung zu stellen, der den Anforderungen des "NATO Standardisation Agreement", Stanag 4569 Level 2, genügt.

Die erfindungsgemäße Lösung ergibt sich in Verbindung mit den Oberbegriffsmerkmalen durch die im kennzeichnenden Teil des Hauptanspruchs angegebene technische Lehre.

Das Panzerungsverbundbauteil ist insgesamt aus einer metallischen Außenschale und in diese Außenschale eingelegte Schichten aufgebaut, wobei diese Schichten untereinander mittels einer Folie und/ oder Kleberschichten fest mit der Außenschale zu einem einteiligen Verbundbauteil miteinander verbunden sind. Dadurch, dass die Außenschale eine ebene Grundfläche und einen diese umlaufenden Rand aufweist und der Schichtaufbau etwa die Höhe des Randes aufweist und auch zwischen der Innenseite des Randes umlaufend eine Folie oder Kleberschicht angeordnet ist, wird sichergestellt, dass sich während des Herstellungsprozesses unter Druck und Wärme die unterschiedlichen durchschusshemmenden Materialien nicht unbemerkt gegeneinander verschieben können.

Diese neue und erfinderische Konstruktion wirkt sich des Weiteren auch dadurch weiter positiv aus, dass die gesamte Panzerung erheblich steifer wird.

Durch die Herstellung in einem Autoklaven unter Wärme und Druck wird sichergestellt, dass ein einteiliges Verbundbauteil zur Verfügung gestellt werden kann, welches über seine gesamte Fläche eine konstant hohe Bauteilqualität aufweist. Die verwandten Folien können beispielsweise PU-Folien sein oder auch andere, ggf. hygroskopische Folien, wobei der Verbund durch das Aufbringen einer umlaufenden Dichtungsmasse in Form einer Kittnaht als Kantenabschluss zwischen dem stirnseitigen Rand der Außenschale und der äußeren Schicht des Schichtaufbaus wirksam gegen das Eindringen von Feuchtigkeit versiegelt ist.

Das erfindungsgemäße Panzerungsverbundbauteil kann bei einer im Wesentlichen ebenen Grundfläche gerade, konvexe und/ oder konkave Seiten oder auch Durchtrittsöffnungen aufweisen, wobei auch solche Durchtrittsöffnungen mit einem hohen umlaufenden inneren Rand der Außenschale versehen sind, so dass auch dort ein Verschieben der durchschusshemmenden Materialien nach innen in Richtung der Durchtrittsöffnung sicher verhindert werden kann. Solche Durchtrittsöffnungen können beispielsweise bei einer Verwendung des Panzerungsverbundbauteils als vollständige Kraftfahrzeugtür vorteilhafterweise zum Einsetzen von Panzerglasscheiben verwendet werden.

Gemäß der Erfindung entspricht die Kontur des Panzerungsverbundbauteils der eines Fahrzeugteiles, wobei das Bauteil selber mit weiteren funktionellen Bauteilen versehen ist und als selbständiges Fahrzeugteil in ein Fahrzeug einbaubar ist. Beispielsweise könnte ein solches Panzerungsverbundbauteil als vollständige Fahrzeugtür ausgebildet sein und funktionelle Bauteile wie Scharniere, Griff, Schlösser und Fenster aufweisen. Solche Bauteile sind trotz ihrer Dicke im Wesentlichen großflächig ausgebildet, können aber auch als räumlich gestaltete, d.h. gebogene oder gewölbte Bauteile ausgeführt sein. Als Fenster können beispielsweise Verbundsicherheitsfenster in die Durchtrittsöffnungen eingesetzt sein.

Vorteilhafte Weiterbildungen des Gegenstandes der Erfindung ergeben sich aus und in Kombination mit den nachfolgenden Unteransprüchen.

Die Außenschale besteht bevorzugterweise aus Aluminium und bildet mit ihrer als ebene Grundfläche ausgebildeten Außenseite und ihren hohen Rändern die nach außen gerichtete Fläche des Panzerungsverbundbauteils, so dass die eigentliche durchschusshemmende Schicht durch diese Außenschale seitlich nach außen hin begrenzt ist, wobei natürlich die Außenschale selber ebenfalls einen wesentlichen Beitrag zur erzielbaren Sicherheit beiträgt.

Eine innerste Schutzschicht besteht entweder aus einer Vielzahl miteinander verbundenen Aramid-Gewebeschichten, die sich im Verbund mit den Keramikkacheln als wirksamer Panzerungsverbund bewährt haben oder aber aus Metall, etwa aus einer Aluminiumplatte, welche sich ebenso hervorragend für einen ballistischen Schutz eignet. Es ist auch mög'ich mehrere dünnerer Metallplatten übereinander zu schichten.

Die der innersten Schutzschicht benachbarte weitere Schutzschicht in der Außenschale besteht vorzugsweise aus Keramikkacheln, die unmittelbar aneinander liegen, wobei sich hier die Konstruktion mit einer metallischen Außenschale ganz besonders vorteilhaft dazu eignet, die Lage der Kacheln in der Schale so zu fixieren, dass sie während des Herstellungsprozesses nicht gegeneinander verschoben werden und dadurch Spalte zwischen den Kacheln entstehen können, wodurch eine erhebliche Schwächung einer Panzerung entstehen würde, die jedoch nach der Herstellung nicht von außen sichtbar wäre, so dass nur ein trügerischer Schutz vorhanden wäre.

Eine dritte äußerste Schutzschicht des im Wesentlichen zweischichtigen Panzerungsverbundbauteils kann dünn ausgebildet sein und aus einem Glasfaserverbundgewebe bestehen. Diese drei Schutzschichten sind durch PU-Folien miteinander und mit einem Kleber in der Außenschale zu einem einteiligen Bauteil verklebt.

Mit dem erfinderischen Panzerungsverbundbauteil kann ein ballistischer Schutz z.B. gegen Kaliber 7,62 x 54 RB-32 (Dragonow) und ein Splitterschutz z.B. gegen Normalsplitter FSP20 zur Verfügung gestellt werden.

Nachfolgend sind zwei Ausführungsbeispiele der Erfindung anhand von Zeichnungen näher beschrieben. Es zeigen:
- Fig. 1: einen Teilschnitt durch ein Panzerungsverbundbauteil und
- Fig. 2: einen Teilschnitt durch ein zweites Panzerungsverbundbauteil.

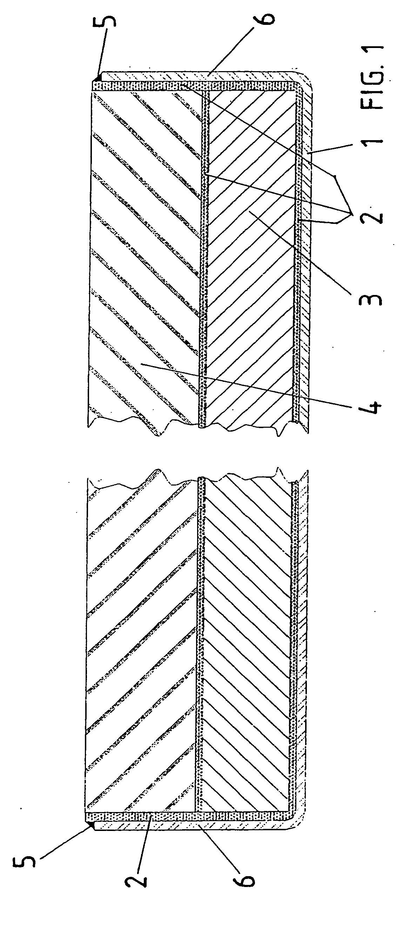

Das Panzerungsverbundbauteil, wie es in Figur 1 dargestellt ist, besteht im Wesentlichen aus einer metallischen Außenschale 1, insbesondere aus Aluminium, in die eine erste Schutzschicht 3 eingelegt ist, welche beispielsweise aus Keramikkacheln besteht, der eine zweite Schutzschicht 4 folgt, die hier aus einem Aramid-Gewebeschichten-Verbund besteht.

Zwischen der Innenfläche der Außenschale 1 und der ersten Schutzschicht 3 sowie zwischen der ersten und der zweiten Schutzschicht 4 und auch zwischen den Innenseiten der Ränder 6 und den Stirnseiten der Schutzschichten 3;4 sind Folienabschnitte angeordnet, die vor dem Einbau als exakter Folienzuschnitt vorgefertigt wurden, durch die alle anderen Bauteile nach einer Wärme- und Druckbehandlung zu einem einteiligen Bauteil miteinander verbunden werden. Zwischen dem stirnseitigen Rand 6 der Außenschale 1 und dem Rand der Folie 2 oder der äußeren Schutzschicht 4 ist umlaufend eine Dichtungsmasse 5 aufgebracht, die den Verbund gegen das Eindringen von Feuchtigkeit versiegelt.

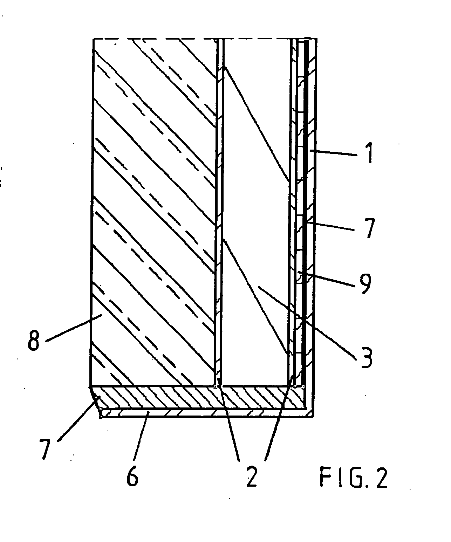

Das Panzerungsverbundbauteil, wie es in Figur 2 dargestellt ist, besteht im Wesentlichen ebenfalls aus einer metallischen Außenschale 1 sowie aus einer nach innen gerichteten inneren Schutzschicht 8 aus Metall, insbesondere aus einer Aluminiumplatte (EN AW-7020) oder auch aus mehreren geschichteten Aluminiumplatten, sowie aus einer dieser innersten Schutzschicht (8) benachbarten weiteren Schutzschicht (3) aus einer oder mehreren Schichten Keramikkacheln. Auf dieser weiteren Schutzschicht (3) ist eine äußere Schutzschicht (9) dünn aufgeklebt, die aus einem im Verhältnis zu den anderen Schutzschichten dünnen Glasfaserverbundgewebe besteht. Die Metallplatte, die Keramikschicht und die Schicht aus Glasfaserverbundgewebe sind untereinander mittels einer PU-Folie miteinander verklebt. Dieser Schichtaufbau wird anschließend mit einer Klebemasse 7 in der metallischen Außenschale 1 auf deren ebenen Grundfläche und den hochgestellten Rändern 6 eingeklebt.

Die Schichtdicken betragen beispielsweise 10mm bis 15mm für die innere Schutzschicht 8 und 8mm bis 10mm für die Schutzschicht 3 aus Keramik.

## Patentansprüche

1. Panzerungsverbundbauteil, insbesondere für ein Fahrzeug, mit mehrschichtigem Aufbau von übereinander angeordneten Schutzschichten (3;4;8;9) unterschiedlicher Materialien in einer metallischen Außenschale, **dadurch gekennzeichnet, dass** es aus einer zur. Fahrzeuginnenseite hin offenen metallischen Außenschale (1) mit einer ebenen Grundfläche und einem umlaufenden Rand (6) besteht und dass in der Außenschale (1) ein Schichtaufbau aus mindestens einer aus PU-Folie (2) und mindestens zwei miteinander verbundenen Schutzschichten (3;4;8;9) angeordnet ist und dass der Schichtaufbau etwa die Höhe des Randes (6) aufweist, der über eine auf der Innenseite des Randes (6) umlaufend angeordnete Folie (2) und/ oder Kleberschicht (7) fest mit dem Schichtaufbau verbunden ist und dass es unter Wärme und Druck als einteiliges Verbundbauteil hergestellt ist und seine ebene Grundfläche gerade, konvexe und/ oder konkave Seiten und/ oder Durchtrittsöffnungen mit ebenfalls umlaufenden Rändern der Höhe des Randes (6) und der Dicke des Panzerungsverbundbauteils aufweist und dass es als räumlich gestaltetes Bauteil ausgebildet ist und die Kontur eines Fahrzeugteils aufweist, an dem funktionelle Bauteile angeordnet sind und dass das Panzerungsverbundbauteil als separates Fahrzeugteil in ein Fahrzeug einbaubar ist.

2. Panzerungsverbundbauteil nach einem der vorgenannten Ansprüche, **dadurch gekennzeichnet, dass** die Außenschale (1) aus Aluminium besteht und dass die Außenseite der ebenen Grundfläche und deren Ränder (6) die nach außen gerichteten Flächen des Bauteils bilden.

3. Panzerungsverbundbauteil nach einem der vorgenannten Ansprüche, **dadurch gekennzeichnet, dass** eine innerste Schutzschicht (4) aus miteinander verbundenen Aramid-Gewebeschichten besteht.

4. Panzerungsverbundbauteil nach einem der vorgenannten Ansprüche 1 bis 2, **dadurch gekennzeichnet, dass** eine innerste Schutzschicht (8) aus Metall besteht.

5. Panzerungsverbundbauteil nach Anspruch 4, **dadurch gekennzeichnet, dass** die innerste Schutzschicht (8) aus einer Aluminiumplatte oder aus mehreren Aluminiumplatten besteht.

6. Panzerungsverbundbauteil nach einem der vorgenannten Ansprüche, **dadurch gekennzeichnet, dass** die der innersten Schutzschicht (4;8) benachbarte weitere Schutzschicht (3) aus einer oder mehreren Schichten Keramikkacheln besteht.

7. Panzerungsverbundbauteil nach einem der vorgenannten Ansprüche, **dadurch gekennzeichnet, dass** die äußerste Schutzschicht (9) dünn ausgebildet ist und aus einem Glasfaserverbundgewebe besteht.

## Claims

1. Composite armour component, in particular for a vehicle, having a multilayered structure of protective layers (3; 4; 8; 9), which are arranged one above another and consist of different materials, in a metallic outer shell, **characterized in that** it comprises a metallic outer shell (1), which is open towards the interior of the vehicle and has a planar base surface and a peripheral edge (6), and **in that** a layer structure of at least one PU foil (2) and at least two interconnected protective layers (3; 4; 8; 9) is arranged in the outer shell (1), and **in that** the layer structure has approximately the height of the edge (6) which is connected permanently to the layer structure via a foil (2) and/or layer of adhesive (7) arranged peripherally on the inner side of the edge (6), and **in that** it is produced with the action of heat and pressure as a single-part composite component and the planar base surface thereof has straight, convex and/or concave sides and/or passage openings likewise with peripheral edges having the height of the edge (6) and the thickness of the composite armour component, and **in that** it is in the form of a three-dimensional component and has the contour of a vehicle part on which functional components are arranged, and **in that** the composite armour component can be installed in a vehicle as a separate vehicle part.

2. Composite armour component according to Claim 1, **characterized in that** the outer shell (1) consists of aluminium, and **in that** the outer side of the planar base surface and the edges (6) thereof form the outwardly directed surfaces of the component.

3. Composite armour component according to either of the preceding claims, **characterized in that** an innermost protective layer (4) consists of interconnected aramid fabric layers.

4. Composite armour component according to either of the preceding Claims 1 and 2, **characterized in that** an innermost protective layer (8) consists of metal.

5. Composite armour component according to Claim 4, **characterized in that** the innermost protective layer (8) consists of one aluminium sheet or of a plurality of aluminium sheets.

6. Composite armour component according to one of the preceding claims, **characterized in that** the further protective layer (3) adjacent to the innermost protective layer (4; 8) consists of one layer or of a plurality of layers of ceramic tiles.

7. Composite armour component according to one of the preceding claims, **characterized in that** the outermost protective layer (9) is thin and consists of a composite glass fibre fabric.

## Revendications

1. Elément composite de blindage, en particulier pour un véhicule, présentant une structure multicouche constituée de couches de protection (3; 4; 8; 9) en différents matériaux disposées les unes au-dessus des autres dans une coquille extérieure métallique, **caractérisé en ce que** il est constitué d'une coquille métallique extérieure (1) à surface de base pleine et bords périphériques (6), ouverte du côté intérieur du véhicule, **en ce qu'**une structure stratifiée constituée d'au moins une feuille (2) en PU et d'au moins deux couches de protection (3; 4; 8; 9) reliées l'une à l'autre est disposée dans la coquille extérieure (1), **en ce que** la structure stratifiée présente sensiblement la hauteur du bord (6) qui est relié solidairement à la structure stratifiée par une feuille (2) et/ou une couche d'adhésif (7) disposées périphériquement sur le côté intérieur du bord (6), **en ce qu'**il est fabriqué par action de chaleur et de pression sous la forme d'un élément composite d'un seul tenant, **en ce que** sa surface plane de base présente des côtés rectilignes, convexes et/ou concaves et/ou des ouvertures de passage dotées de bords périphériques qui ont la hauteur du bord (6) et l'épaisseur de l'élément composite de blindage, **en ce qu'**il est configuré comme élément tridimensionnel et présente le contour d'une pièce du véhicule sur laquelle des éléments fonctionnels sont disposés et **en ce que** l'élément composite de blindage peut être monté comme pièce séparée dans un véhicule.

2. Elément composite de blindage selon la revendication 1, **caractérisé en ce que** la coquille extérieure (1) est réalisée en aluminium et **en ce que** le côté extérieur de la surface plane de base et de ses bords (6) forment la surface de l'élément orientée vers l'extérieur.

3. Elément composite de blindage en ce qu'une couche intérieure de protection (4) est constituée de couches de tissu d'aramide reliées les unes aux autres.

4. Elément composite de blindage selon l'une des revendications 1 à 2 qui précèdent, **caractérisé en ce que** la couche intérieure de protection (8) est réalisée en métal.

5. Elément composite de blindage selon la revendication 4, **caractérisé en ce que** la couche intérieure de protection (8) est constituée d'une plaque d'aluminium ou de plusieurs plaques d'aluminium.

6. Elément composite de blindage en ce que l'autre couche de protection (3) voisine de la couche intérieure de protection (4; 8) est constituée d'une ou plusieurs couches de carreaux de céramique.

7. Elément composite de blindage en ce que la couche extérieure de protection (9) est mince et est constituée d'un tissu composite de fibres de verre.
